# EUROPEAN PATENT APPLICATION

(11) **EP 2 713 068 A2**
(43) Date of publication of application: **02.04.2014**
(21) Application number: 13184682.6
(22) Date of filing: 17.09.2013
(51) Int. Cl.: F16C 33/66

(54) **Pin-type cage and rolling bearing including the pin-type cage**

(30) Priority: 26.09.2012 JP 2012211998
(71) Applicant: JTEKT CORPORATION, Osaka-shi Osaka 542-8502 (JP)
(72) Inventor: TERAMOTO, Takeshi, Osaka-shi,, Osaka 542-8502 (JP); FUJIWARA, Hideki, Osaka-shi,, Osaka 542-8502 (JP)
(74) Representative: Winter, Brandl, Fürniss, Hübner, Röss, Kaiser, Polte - Partnerschaft

(57) **Abstract**

A pin-type cage includes a plurality of pins passed through respective through-holes formed along the central axes of a plurality of rolling elements that are arranged in the circumferential direction of a rolling bearing, and annular retaining members that connect the pins to each other at axially opposite ends of the pins. Each of the pins has a reservoir space that is formed in the pin and that is filled with lubricant, and supply holes used to supply the lubricant from the reservoir space to an outer periphery of the pin.

## Description

### BACKGROUND OF THE INVENTION

### 1. Field of the Invention

The invention relates to a pin-type cage suitable for use in, for example, a rolling bearing used to support a main shaft of a wind turbine generator, and a rolling bearing including the pin-type cage.

### 2. Description of Related Art

For example, a tapered roller bearing is used as a rolling bearing used to support a main shaft of a wind turbine generator, and a pin-type cage may be used as a cage of the tapered roller bearing (refer to, for example, Japanese Patent Application Publication No. 2008-256168 (JP 2008-256168 A)). The pin-type cage includes a pair of retaining rings and a plurality of pins. The retaining rings are arranged on axially opposite sides of the tapered rollers. The pins are arranged at intervals in the circumferential direction, and are connected at their respective ends to the retaining rings. Each pin is passed through a through-hole that is formed along the central axis of a corresponding one of the tapered rollers. Thus, the tapered rollers are retained at predetermined intervals in the circumferential direction.

In the case of the pin-type cage as described above, it is necessary to lubricate sliding faces, that is, the inner peripheries of the tapered rollers, which define the through-holes, and the outer peripheries of the pins with grease. However, clearances between the inner peripheries of the tapered rollers and the pins are so small that introducing the grease into the through-holes is difficult. Therefore, filling the through-holes with grease has been a cumbersome and time-consuming work. In addition, the rolling bearing used to support the main shaft of the wind turbine generator is considerably large, and therefore, the retaining rings of the pin-type cage are also large. The large retaining rings have the disadvantage that handling such as storage and conveyance of the large retaining rings is difficult.

Further, the radial dimensions of the retaining rings of the pin-type cage are set on the basis of the radial dimensions of the rolling bearing, and therefore, it has been difficult to achieve commonality of the retaining rings among rolling bearings having different radial dimensions.

### SUMMARY OF THE INVENTION

One object of the invention is to provide a pin-type cage configured such that lubrication between rolling elements and pins is facilitated, and a rolling bearing including the pin-type cage.

An aspect of the invention relates to a pin-type cage including: a plurality of pins respectively passed through through-holes of a plurality of rolling elements that are arranged in a circumferential direction of a rolling bearing; and a pair of annular retaining members that connect the pins to each other at axially opposite ends of the pins. Each of the pins has a reservoir space that is formed in the pin and that is filled with lubricant, and supply holes used to supply the lubricant from the reservoir space to an outer periphery of the pin.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view illustrating part of a rolling bearing according to an embodiment of the invention, the sectional view taken along the axial direction of the rolling bearing;
FIG. 2 is a view of the rolling bearing as viewed in a direction indicated by an arrow II in FIG. 1;
FIG. 3 is a sectional view illustrating the relationship between tapered rollers and a pin-type cage; and
FIG. 4 is an exploded view illustrating the pin-type cage that has been disassembled into cage segments.

### DETAILED DESCRIPTION OF EMBODIMENTS

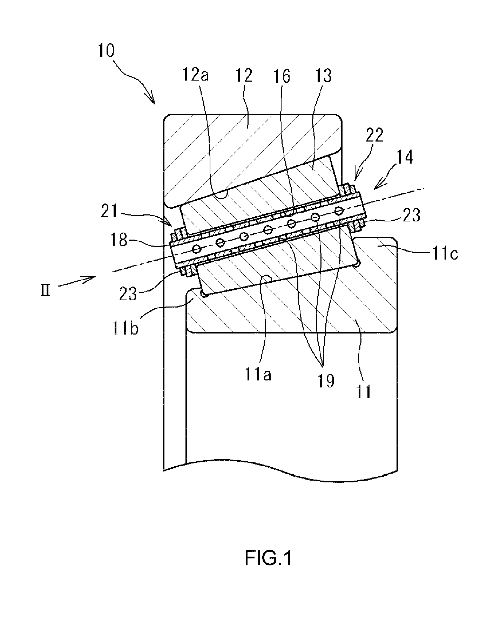

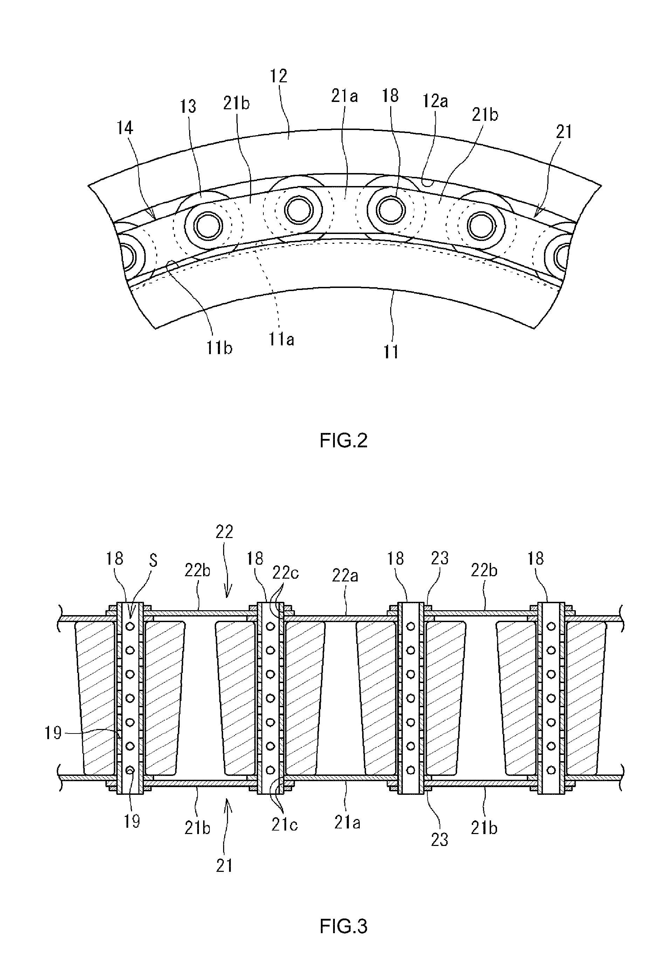

Hereinafter, embodiments of the invention will be described with reference to the accompanying drawings. FIG. 1 is a sectional view illustrating part of a rolling bearing 10 according to an embodiment of the invention, the sectional view taken along the axial direction of the rolling bearing 10. FIG. 2 is a view of the rolling bearing 10 as viewed in a direction indicated by an arrow II in FIG. 1. The rolling bearing 10 in the present embodiment is used to support, for example, a main shaft of a wind turbine generator. The rolling bearing 10 includes an annular inner ring 11, an annular outer ring 12, a plurality of rolling elements 13, and a pin-type cage 14. The outer ring 12 is arranged radially outward of the inner ring 11. The rolling elements 13 are arranged in the circumferential direction, between the inner ring 11 and the outer ring 12. The pin-type cage 14 retains the rolling elements 13 at predetermined intervals in the circumferential direction.

The inner ring 11 has an inner ring raceway 11a formed in a tapered shape, and a small rib 11b and a large rib 11c that are located on axially opposite sides of the inner ring raceway 11a and that are projected radially outward. The outer ring 12 has an outer ring raceway 12a formed in a tapered shape. The rolling elements 13 are tapered rollers formed in a circular truncated cone shape, and are rollable on the inner ring raceway 11a and the outer ring raceway 12a. Axial displacement of the tapered rollers 13 is limited by the small rib 11b and the large rib 11c. Further, a through-hole 16 is formed along the central axis of each of the tapered rollers 13.

FIG. 3 is a sectional view illustrating the tapered rollers 13 and the pin-type cage 14. The pin-type cage 14 includes a plurality of pins 18 and a pair of retaining members 21, 22, and is formed in an annular shape as a whole. The pins 18 are passed through the through-holes 16 formed in the tapered rollers 13. The pins 18 are connected to each other at their axially opposite ends by the retaining members 21, 22. Each of the pins 18 is formed in a cylindrical shape (hollow shape) having a uniform outer diameter over its entire length. The interior part of each cylindrical pin 18 is used as a reservoir space S which is filled with lubricant such as grease.

Supply holes 19 are formed in each pin 18, and extend through the pin 18 in the radial direction from the reservoir space S to an outer peripheral face of the pin 18. The supply holes 19 are arranged in a plurality of rows in the circumferential direction of the outer peripheral face of each pin 18. A plurality of the supply holes 19 is formed over the entire length of each pin 18. The supply holes 19 are formed in a range that extends over the entirety of the through-hole 16 in each tapered roller 13.

The retaining member 21 arranged on the small diameter end face side of the tapered rollers 13 is formed by connecting together a plurality of link members 21a, 21b in a circular pattern. The retaining member 22 arranged on the large diameter end face side of the tapered rollers 13 is formed by connecting together a plurality of link members 22a, 22b in a circular pattern. Further, the retaining member 21 includes the inner link members 21a and the outer link members 21b, and the retaining member 22 includes the inner link member 22a and the outer link member 22b. The inner link members 21a and the outer link members 21b are arranged alternately in the circumferential direction, and the inner link members 22a and the outer link members 22b are arranged alternately in the circumferential direction. The inner link members 21a, 22a of the retaining members 21, 22 are arranged so as to be opposed to each other, and the outer link member 21b, 22b of the retaining members 21, 22 are arranged so as to be opposed to each other.

The pins 18 are passed through holes 21c formed in end portions of the inner link members 21a and the outer link member 21b and holes 22c formed in end portions of the inner link members 22a and the outer link members 22b, thereby connecting adjacent link members 21a, 21b to each other and connecting adjacent link members 22a, 22b to each other. Stoppers 23 such as C-rings are attached to the pins 18 at positions outside the outer link member 21b, 22b. Thus, the stoppers 23 prevents the inner link members 21a, 22a and the outer link member 21b, 22b from being removed from the pins 18.

With the configuration as described above, each inner link member 21a and a corresponding one of the outer link members 21b, which are arranged adjacent to each other in the circumferential direction, are coupled to each other so as to be pivotable relative to each other about the central axis of the corresponding pin 18 (i.e., the relative angle between each inner link member 21a and a corresponding one of the outer link members 21b, which are arranged adjacent to each other in the circumferential direction, can be changed), and each inner link member 22a and a corresponding one of the outer link members 22b, which are arranged adjacent to each other in the circumferential direction, are coupled to each other so as to be pivotable relative to each other about the central axis of the corresponding pin 18 (i.e., the relative angle between each inner link member 22a and a corresponding one of the outer link members 22b, which are arranged adjacent to each other in the circumferential direction, can be changed). The outer link members 21b, 22b may be secured to the pins 18 by welding or the like, instead of by the stoppers 23. However, securing the outer link members 21b, 22b by welding may cause thermal affection on the pins 18 and the link members 21a, 21b, 22a, 22b, resulting in occurrence of distortion or the like. Therefore, preferably, the stoppers 23 should be used as in the present embodiment.

In the pin-type cage 14 in the present embodiment, each pin 18 has the reservoir space S and the supply holes 19, and therefore, the lubricant supplied in the reservoir space S can be supplied to the outer peripheral face of the pin 18 through the supply holes 19. Therefore, it is possible to appropriately lubricate the sliding regions of the outer peripheral face of each pin 18 and the inner peripheral face of each tapered roller 13, which defines the through-hole 16. Further, because the supply holes 19 are arranged in a plurality of rows in the circumferential direction of the outer peripheral face of each pin 18 and a plurality of the supply holes 19 is formed over the entire length of each pin 18, the lubricant can be supplied over substantially the entire outer peripheral face of each pin 18 and substantially the entire inner peripheral face of each tapered roller 13, which defines the through-hole 16.

The pin-type cage 14 in the present embodiment includes the pins 18 and the link members 21a, 21b, 22a, 22b. The link members 21a, 21b, 22a, 22b that are adjacent to each other in the circumferential direction are arranged so as to be pivotable relative to each other. Thus, movements of the link members 21a, 21b, 22a, 22b and the pins 18 in the circumferential direction and the radial direction are likely to occur in response to rotation of the rolling bearing 10 (relative rotation between the inner ring 11 and the outer ring 12). The lubricant supplied to the outer peripheral faces of the pins 18 is easily spread in the entire clearances between the outer peripheral faces of the pins 18 and the inner peripheral faces of the tapered rollers 13, which define the through-holes 16, due to the movements of the pins 18. Thus, it is possible to appropriately perform lubrication between the pins 18 and the tapered rollers 13.

Loads exerted on the pins 18 from the tapered rollers 13 are absorbed through the movements of the pins 18, and therefore, impacts are also attenuated. Thus, the durability of the pins 18 is enhanced. Because the pins 18 are formed in a cylindrical shape, it is difficult to increase the wall thickness of the pins 18 to enhance the strength of the pins 18. However, because the loads and the impacts exerted from the tapered rollers 13 are reduced through the movement of the pins 18. Thus, it is possible to easily ensure the required strength.

The retaining member 21 is formed of the link members 21a, 21b, and the retaining member 22 is formed of the link members 22a, 22b. Therefore, by changing the number of the link members 21a, 21b, 22a, 22b, it is possible to form pin-type cages 14 having different radial dimensions. Accordingly, it is possible to achieve commonality of the link members 21a, 21b, 22a, 22b among the rolling bearings 10 having the same pitch between the tapered rollers 13 in the circumferential direction but having different radial dimensions. As a result, it is possible to reduce the manufacturing costs.

The pin-type cage 14 in the present embodiment is assembled to the rolling bearing 10 by, for example, the following methods. In a first method, the tapered rollers 13 are arranged one by one on the inner ring raceway 11a while the pins 18 are passed through the through-holes 16, and then, the pins 18 are connected to each other by the link members 21a, 21b, 22a, 22b. However, the first method has the disadvantage that the tapered rollers 13 and the link members 21a, 21b, 22a, 22b are likely to be removed from the inner ring 11 during the assembling process.

In a second method, the pin-type cage 14, which will be formed into an annular shape, is assembled in advance into such a shape that the pin-type cage 14 is cut at one position in the circumferential direction (formed into a shape of a strip), the strip-shaped pin-type cage 14 is wound around the inner ring raceway 11a, and the ends of the strip-shaped pin-type cage 14, at the cut position, are connected to each other by the link members 21a, 21b, 22a, 22b. According to the second method, the tapered rollers 13 and the pin-type cage 14 are less likely to be removed from the inner ring 11 during the assembling process. Therefore, the second method is preferable.

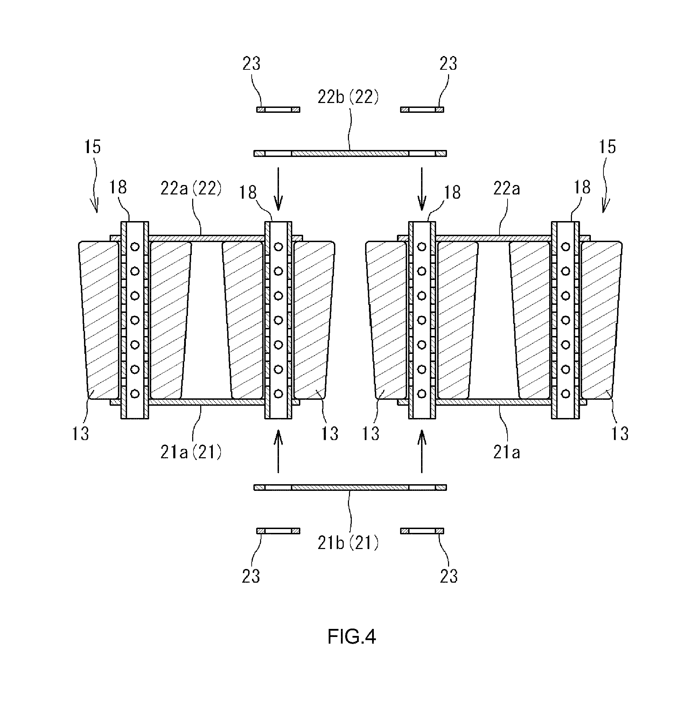

In a third method, a plurality of cage segments 15 each of which is formed of two pins 18 passed through the tapered rollers 13 and the inner link members 21a, 22a that connect the two pins 18 to each other is prepared in advance, as illustrated in FIG. 4. The cage segments 15 are then arranged on the inner ring raceway 11a while the cage segments 15 are connected to each other by the outer link members 21b, 22b. In the third method, the cage segments 15 are more likely to be removed from the inner ring 11 during the assembling process than in the second method. However, in the third method, the cage segments 15 are assembled onto the inner ring 11 more easily than in the first method in which all the components that are separated from one another are assembled together one by one. Further, preparing the cage segments 15 in advance makes the number of components smaller than that in the case where all the components that are separated from one another are assembled together one by one. In addition, each cage segment 15 is smaller than the pin-type cage 14 that is formed into such a shape that the pin-type cage 14 is cut at one position in the circumferential direction. As a result, handling such as storage and conveyance is facilitated. In each cage segment 15, the inner link members 21a, 22a may be secured to the pins 18 by welding or press-fitting, or by another method.

The invention is not limited to the embodiments described above, and may be implemented in various other modified embodiments within the technical scope of the invention defined in the appended claims. For example, the pin-type cage 14 may be used in a state where the pin-type cage 14 is cut at one position in the circumferential direction. In this case, movements of the link members 21a, 21b, 22a, 22b and the pins 18 are more likely to occur in response to the rotation of the rolling bearing 10. Therefore, loads exerted on the pins 18 from the tapered rollers 13 are appropriately absorbed, resulting in impact attenuation.

Each of the link members 21a, 21b, 22a, 22b constituting the retaining members 21, 22 may be extended over three or more pins 18. In this case, each of the link members 21a, 21b, 22a, 22b is preferably formed in the shape of a circular arc of which the center coincides with the axis of the rolling bearing 10.

Further, the pins 18 may be closed at their one longitudinal ends. Thus, it is possible to restrain the lubricant from leaking from the end portions of the pins 18. The invention may be applied not only to the rolling bearing 10 used to support the main shaft of the wind turbine generator but also to rolling bearings 10 used in various systems. Further, the rolling elements 13 in the rolling bearing 10 may be cylindrical rollers, barrel rollers or balls, instead of the tapered rollers.

With the pin-type cage and the rolling bearing according to the invention, it is possible to appropriately perform the lubrication between the rolling elements and the pins.

## Claims

1. A pin-type cage, comprising:
a plurality of pins respectively passed through through-holes of a plurality of rolling elements that are arranged in a circumferential direction of a rolling bearing; and
a pair of annular retaining members that connect the pins to each other at axially opposite ends of the pins;
wherein each of the pins has a reservoir space that is formed in the pin and that is filled with lubricant, and supply holes used to supply the lubricant from the reservoir space to an outer periphery of the pin.

2. The pin-type cage according to claim 1, wherein each of the pins is formed in a cylindrical shape, and the supply holes are formed so as to extend through the pin in a radial direction from an inner peripheral face to the outer peripheral face of the pin.

3. The pin-type cage according to claim 1 or 2, wherein each of the retaining members is formed of a plurality of link members that are connected to each other so as to be pivotable about axes of the corresponding pins.

4. The pin-type cage according to claim 3, wherein the pin-type cage is formed of a plurality of cage segments each including a plurality of the pins and the link members that connect the pins to each other, the cage segments being connected to each other in the circumferential direction by the link members other than the link members included in the cage segments.

5. The pin-type cage according to claim 3 or 4, wherein the pin-type cage is cut at one position in the circumferential direction.

6. A rolling bearing comprising:
an inner ring;
an outer ring arranged radially outward of the inner ring;
a plurality of rolling elements arranged in a circumferential direction of the rolling bearing, between the inner ring and the outer ring; and
the pin-type cage that retains the rolling elements at predetermined intervals in the circumferential direction according to any one of claims 1 to 5.
